Europäisches Patentamt

European Patent Office

Office européen des brevets

(19)

(11) Veröffentlichungsnummer: **0 211 444**
**B1**

(12) **EUROPÄISCHE PATENTSCHRIFT**

(45) Veröffentlichungstag der Patentschrift:
26.10.88

(21) Anmeldenummer: 86110909.8

(22) Anmeldetag: 07.08.86

(51) Int. Cl.⁴: **B 60 H 1/00,** B 60 H 3/06

(54) Ventilationssystem, insbesondere für Fahrzeugkabinen mit einem Luftfilter.

(30) Priorität: 12.08.85 US 764362

(43) Veröffentlichungstag der Anmeldung:
25.02.87 Patentblatt 87/9

(45) Bekanntmachung des Hinweises auf die Patenterteilung:
26.10.88 Patentblatt 88/43

(84) Benannte Vertragsstaaten:
DE FR GB

(56) Entgegenhaltungen:
EP - A - 0 125 562
GB - A - 1 465 914

(73) Patentinhaber: **DEERE & COMPANY, 1 John Deere Road,
Moline Illinois 61265 (US)**

(72) Erfinder: **Thompson, James Edward, 2022 Lilac Lane,
Cedar Falls Iowa 50613 (US)**
Erfinder: **Novick, Nicholas Steve, 422 Sunnylane, Denver
Iowa 50622 (US)**

(74) Vertreter: **Feldmann, Bernhard et al, DEERE &
COMPANY European Office, Patent Department
Steubenstrasse 36-42 Postfach 503,
D-6800 Mannheim 1 (DE)**

**Beschreibung**

Die Erfindung bezieht sich auf ein Ventilationssystem, insbesondere für Fahrzeugkabinen, mit einem Luftfilter, durch den Luft mittels wenigstens eines Gebläses geführt wird und der einen inneren Hohlraum aufweist, der zumindest teilweise von Filtermaterial umgeben ist.

Nicht nur um die Bedienungsperson, beispielsweise von Ackerschleppern, gegen Wind, Sonne, Schnee oder Regen, sondern auch gegen Staub, Geräusche und kalte und warme Temperaturen zu schützen, werden Ackerschlepper vielfach mit sehr komfortablen Fahrerkabinen ausgerüstet. Derartige Kabinen müssen gut belüftet werden, wozu frische Luft von aussen eingeführt, gereinigt und gegebenenfalls klimatisiert in das Innere der Fahrerkabine geleitet wird. Infolge des naturgemässen Einsatzes des Ackerschleppers auf Feldern wird mit der frischen Luft eine grosse Menge von Staub und anderen Fremdkörpern eingesaugt.

Vielerlei Ventilationssysteme, die alle Luftfilter verwenden, sind bereits bekannt geworden. So wird bei der Vorrichtung nach der US-A-4 344 356 die Frischluft dazu benutzt, das Innere der Kabine unter Druck zu setzen, so dass Staub nicht durch Bruchstellen oder Ritzen in das Kabineninnere gelangen kann. Die Filter sind dabei so angeordnet, dass sie den Staub oder andere Fremdpartikel der Aussenluft an ihrer Aussenseite auffangen. Sie sind in der Regel derart in einem dazu vorgesehenen Raum angeordnet, dass die Filter entfernt und gereinigt werden können. Jedoch infolge der Vibration des Fahrzeuges passiert es sehr häufig, dass der Staub von der Filteroberfläche abfällt und sich in dem Raum ansammelt. Diese Räume sind in der Regel schwer zugänglich und können dementsprechend schlecht gereinigt werden. Noch grössere Probleme treten dann auf, wenn das Filtersystem in dem Kabinendach vorgesehen ist, da dann immer die Gefahr besteht, dass beim Reinigen der Staub und andere Fremdkörper auch auf die Bedienungsperson herabfallen und gegebenenfalls noch in das Innere der Kabine.

Bei dem Ventilationssystem, von dem die Erfindung ausgeht (US-A-4 072 487), hat man bereits versucht, einige der vorstehenden Nachteile dadurch zu vermeiden, dass der oder die Luftfilter am Ende des Kabinendaches in einem nach unten hin offenen Raum vorgesehen sind, so dass Frischluft von aussen durch die Filterelemente in den Hohlraum über ein Gebläse gesaugt wird in der Hoffnung, dass Staub und andere Fremdpartikel infolge der Vibration des Fahrzeuges durch den offenen Boden des Raumes nach unten fallen. Wenn dies auch der Fall sein könnte, so wird hierbei mit Sicherheit die bei Ackerschlepperkabinen immer vorgesehene rückwärtige Scheibe stark verschmutzt. Andererseits besteht aber auch die Gefahr, dass beim Saugen des Gebläses die herunterfallenden Staub- und Schmutzpartikel wieder mit angesaugt werden und dadurch den Luftfilter sehr schnell zusetzen. Deshalb ist in diesem Dokument zusätzlich ausgeführt, dass eine weitere Reinigung des Filters immer dann auftreten könnte, wenn die Fahrerkabine plötzlich zugeschlagen wird, da dann durch den in der Fahrerzelle entstehenden Überdruck ein Rückstoss an Luft entsteht, durch die der Filter gereinigt werden könnte. Dies ist natürlich nur dann möglich, wenn das Gebläse ausser Betrieb ist.

Die mit der Erfindung zu lösende Aufgabe wird darin gesehen, das Ventilationssystem mit einem Luftfilter zu versehen, der Staub und andere Fremdkörper zuverlässig ausfiltert und verhindert, dass Staub und Fremdkörper aus ihm austreten.

Diese Aufgabe ist nach der Erfindung dadurch gelöst worden, dass das oder die Gebläse derart angeordnet sind, dass Aussenluft zunächst in den Hohlraum eintritt und dann durch das Filtermaterial austritt, wodurch erreicht wird, dass die Luftführung im Vergleich zu herkömmlichen Luftfiltern mit einem inneren Hohlraum umgekehrt wird, so dass die Fremdkörper bzw. der Staub in den Hohlraum zurückfallen und dort gesammelt werden können. Hierdurch ergibt sich letztlich eine problemlose Reinigung, wenn der Luftfilter aus dem Ventilationssystem entnommen wird, da dann dabei auch der Staub und die Schmutzpartikel mit herausgenommen werden und nicht mit der Bedienungsperson oder dem den Luftfilter aufnehmenden Raum in Berührung kommen.

Vorteilhaft ist der Luftfilter in seinem Bereich mit dem inneren Hohlraum mit einem Sammelraum für Schmutzpartikel versehen, was in einfacher Weise dadurch erfolgen kann, dass beispielsweise die Bodenseite des inneren Hohlraumes geschlossen ist bzw. eine entsprechende Vertiefung aufweist.

Damit die ungereinigte Aussenluft in einfacher Weise in den inneren Hohlraum gelangen kann, wird nach der Erfindung ferner vorgeschlagen, dass der Luftfilter an seinem einen Ende eine Einlassöffnung für die Aussenluft aufweist. Um einen derartigen Luftfilter in einem Ventilationssystem in einfacher Weise einbauen zu können, kann nach der Erfindung zusätzlich vorgesehen werden, dass zu dem Durchtritt der Aussenluft eine Öffnung in einer Anschlagfläche vorgesehen ist, gegen die eine Stirnfläche an dem Ende des Luftfilters mit der Einlassöffnung dichtend gepresst wird. Damit ist gewährleistet, dass alle Aussenluft auch in den Luftfilter gelangt.

Zweckmässig kann der Luftfilter beidenends offen ausgebildet sein und an seinem der Einlassöffnung abgelegenen Ende einen Verschlussdeckel aufweisen, der derart ausgebildet ist, dass er im geschlossenen Zustand und in Betriebsstellung des Luftfilters, d.h. wenn dieser fest im Ventilationssystem installiert ist, die Stirnfläche gegen die Anschlagfläche andrückt, wodurch der Verschlussdeckel zwei Funktionen wahrnimmt, einmal das Verschliessen und zum anderen das abdichtende Anpressen des Luftfilters an die Öffnung der Anschlagfläche. Hierzu ist der Verschlussdeckel abgestuft ausgebildet, d.h. er weist einen Filterstopfen zum Verschliessen des einen Endes des inneren Hohlraumes mit kleinerem Durchmesser und einen Scheibenteil zum Verschliessen des der Stirnfläche abgelegenen Endes des Luftfilters mit grösserem Durchmesser auf, wobei gegen den Scheibenteil ein Handverschluss pressbar ist, der in ein eine Öffnung zum Herausnehmen des Luftfilters aufweisendes Wandteil eindrehbar ist. Das Eindrehen kann beispielsweise wie bei einer Schraube oder wie bei einem Bajonettverschluss erfolgen, wodurch immer der erwünschte Anpressdruck erzeugt wird, so dass letztlich der gesamte Luftfilter über den Verschlussdeckel zwischen dem Wandteil und der Anschlagfläche in abgedichteter Weise gehalten ist.

Im einzelnen können Filterstopfen und Scheibenteil aus elastischem Material hergestellt sein, und zwischen Scheibenteil und Handverschluss kann eine Platte vorgesehen sein, wobei Filterstopfen, Scheibenteil, Platte und Handverschluss miteinander verbunden sind und der Handverschluss gegenüber dem Filterstopfen und Scheibenteil drehbar ist, so dass beim Drehen des Handverschlusses der Filterstopfen in das Innere des Hohlraumes eindringt und der Scheibenteil sich fest gegen die Stirnfläche des Luftfilters anlegt. Hierbei kann der Filterstopfen noch einen etwas grösseren Durchmesser als der Durchmesser des inneren Hohlraumes aufweisen, so dass beim Herausnehmen des Luftfilters durch einfaches Ziehen an dem Handverschluss nach dessen Lösen aus dem Wandteil der gesamte Filter aus der entsprechenden Öffnung herausgenommen werden kann, aber noch verschlossen bleibt, so dass keine Staub- oder Schmutzpartikel aus dem inneren Hohlraum oder dem gegebenenfalls vorgesehenen Sammelraum herausfallen können. Im ganzen ergibt sich dadurch eine besonders einfache Montage bzw. Demontage des Luftfilters, ohne dass die Bedienungsperson mit den Schmutzpartikeln in Berührung kommt, oder dass Schmutzpartikel in den den Luftfilter umgebenden Raum gelangen könnten.

Nach der Erfindung kann ferner vorgesehen werden, dass der Luftfilter stromabwärts des Gebläses vorgesehen ist, wobei das Gebläse unmittelbar in die Öffnung der Anschlagfläche bläst.

Wenn schliesslich noch der Luftfilter im Querschnitt oval ausgebildet wird, ergibt sich ein relativ grosser Sammelraum für die Schmutzpartikel in dem inneren Hohlraum an dessen Unterseite, wobei nach wie vor ein sehr grosser Bereich zum Luftaustritt aus dem inneren Hohlraum in die Filterelemente erhalten bleibt.

In der Zeichnung ist ein nachfolgend näher erläutertes Ausführungsbeispiel der Erfindung dargestellt. Es zeigt:

Fig. 1 ein in einem Kabinendach angeordnetes Ventilationssystem in perspektivischer Darstellung,

Fig. 2 einen Schnitt nach der Linie 2-2 in Fig. 1 und im wesentlichen den Luftfilter darstellend,

Fig. 3 einen Schnitt nach der Linie 3-3 in Fig. 2 und im wesentlichen den Verschlussdeckel zeigend.

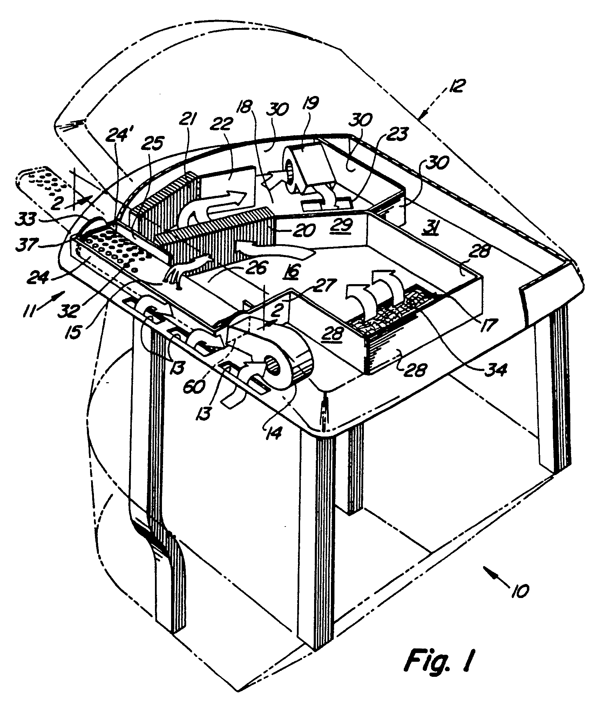

Fig. 1 zeigt ein in einer Fahrerkabine 10 angeordnetes Ventilationssystem 11, das im Kabinendachbereich vorgesehen ist, wobei ein Kabinendach 12 in strichpunktierten Linien im angehobenen Zustand angedeutet ist. Eine das Ventilationssystem abschliessende Deckenplatte ist der Einfachheit halber in der Zeichnung nicht dargestellt.

Der Luftverlauf ist in Fig. 1 durch entsprechende Pfeile gekennzeichnet, und es ist erkennbar, dass Frischluft oder Aussenluft durch Einlässe 13 über ein Gebläse 14 in das Ventilationssystem 11 eingesaugt wird und dann in einem Luftfilter 15 gedrückt wird.

Dieser Luftfilter 15 ist in einem Filterraum 32 angeordnet, und gefilterte Luft tritt durch die äussere Oberfläche des Luftfilters 15 aus und gelangt in einen Raum 16, der ebenfalls einen Einlass 17 aufweist, über den Luft aus dem Inneren der Kabine in diesen Raum gelangen kann. Hierbei handelt es sich um verbrauchte Kabinenluft, wozu ein Filter 34 über dem Einlass 17 vorgesehen ist, um Staub, Zigarettenqualm oder andere Fremdpartikel aus der Kabinenluft auszufiltern. Da aber die Kabinenluft in der Regel wenig Schmutzpartikel etc. aufweist, braucht der Filter 34 nicht all zu gross ausgebildet zu werden und kann aus einem herkömmlichen Flachfilter bestehen. Ein weiteres Gebläse 19 saugt gefilterte Aussenluft und die gefilterte Luft aus dem Kabinenraum aus dem Raum 16 in einen Klimatisierungsraum 18, wobei beide Luftströme vorher noch durch einen Wärmetauscher 20 geführt werden. Hier wird den Luftströmen in herkömmlicher Weise über ein Kühlmedium Wärme entzogen. In dem Klimatisierungsraum 18 ist ferner noch eine Luftklappe 22 vorgesehen, die hier in ihrer offenen Position dargestellt ist, so dass die aus dem Wärmetauscher kommende Luft direkt in das Gebläse 19 gelangt. Die Luftklappe 22 kann aber auch in eine geschlossene Stellung verstellt werden, in der ihr rechtes Ende gegen den Wärmetauscher 20 anliegt, wodurch die Luftströme durch eine Wärmelamelle 21 geführt werden, die dazu dient, die Luft aufzuheizen, bevor sie in das Gebläse 19 gelangt. Letzteres bläst die Luft direkt in das Kabineninnere durch einen Luftauslass 23, der mit einem in der Zeichnung der Einfachheit halber nicht dargestellten Luftverteilungssystem verbunden ist.

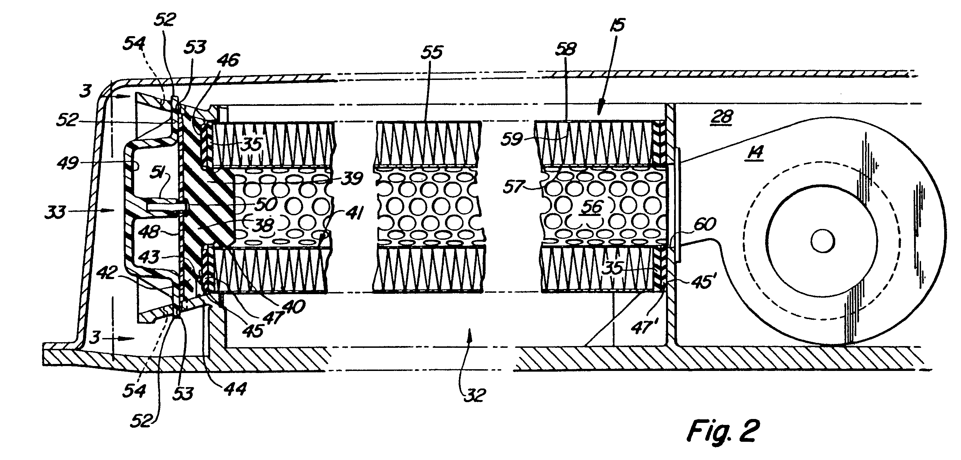

Der Filterraum 32, der Raum 16 und der Klimatisierungsraum 18 benutzen alle den Kabinenhimmel 31 als gemeinsamen Boden und eine gemeinsame abdichtende Dachplatte, die in Fig. 1 nicht gezeigt ist. Der Raum 16 wird begrenzt durch Wandteile 27, 28, 29 und den Wärmetauscher 20, wohingegen der Klimatisierungsraum 16 durch Wandteile 25, 30, 29 und den Wärmetauscher 20 abgeschlossen ist. Die Seiten des Filterraumes 32 werden durch den Wandteil 25 und Wandteile 24, 24' und den Wandteil 27 gebildet, wobei der Wandteil 27 eine Öffnung 60 zum Eintritt der Aussenluft aus dem Gebläse 14 in dem Luftfilter 15 aufweist. Der Wandteil 24' des Filterraums 32 ist ferner noch mit einer Öffnung 37 versehen, die zur Montage oder Demontage des Luftfilters 15 dient. Während des Einsatzes ist diese Öffnung durch einen Verschlussdeckel 33 verschlossen, der gleichzeitig als Verschlusselement für den Luftfilter dienen kann, was aber nicht zwingend ist. In Fig. 2 ist der Luftfilter 15 im Schnitt und im Vergleich zu Fig. 1 im grösseren Massstab dargestellt. Der Luftfilter 15 selbst hat einen ovalen Querschnitt und weist einen inneren Hohlraum 56 auf, der als Sammelraum für die Schmutzpartikel ausgebildet sein kann. Das Herzstück 55 des Luftfilters 15 wird durch perforierte Metallröhren 57 und 58 gebildet, die ineinander gesteckt sind, aber zwischen sich einen Ringspalt offen lassen, in dem Filterelemente 59 vorgesehen sind. Die Filterelemente können über den gesamten Umfang der Herzstückes vorgesehen sein, wobei es möglich ist, dass die innere Metallröhre 57 an ihrer Unterseite geschlossen ist, um die Schmutzpartikel dort auffangen zu können. Andere Lösungen für den Sammelraum für die Schmutzpartikel sind durchaus denkbar. Die Filterelemente 59 sind wellenförmig angeordnet und dienen dazu, Schmutz oder andere Fremdkörper auszufiltern und in dem inneren Hohlraum 56 einzuschliessen, wenn die Aussenluft in den inneren Hohlraum geblasen und durch die Filterelemente 59 durch die Mantelflächen des Luftfilters umgeleitet wird. Die Filterelemente und die Metallröhren 57 und 58 können an jeder Seite des Luftfilters 15 mit einem Dichtband 35 verbunden sein. Diese sind aus relativ unelastischem bzw. festem Werkstoff hergestellt und dienen dazu, das Innere des Luftfilters an den Enden abzudichten. Je eine Dichtungsmanschette 47, 47' aus elastischem Material, beispielsweise Schaumstoff ist mit der äusseren Oberfläche eines jeden Dichtbandes 35 verbunden. Die Dichtungsmanschette 47 und 47' sind jeweils mit einer äusseren Stirnfläche 45, 45' versehen, die gegen den Wandteil 27 oder gegen den Verschlussdeckel 33 anliegen, sofern letzterer auch als Verschluss für den Luftfilter 15 dient. Da beide Seiten des Luftfilters offen sind und da der Luftfilter mit seiner Längsachse in der Horizontalen angeordnet ist, wird beim Ausbau kein Schmutz in den Filterraum oder auf die Bedienungsperson fallen.

Aus Fig. 2 geht ferner hervor, dass der Filterraum 32 angeordnete Luftfilter 15 so ausgebildet ist, dass der Verschlussdeckel 33 sowohl die Öffnung 37 in dem Filterraum als auch das eine Ende des Luftfilters abdichtend verschliesst. Im einzelnen wird diese Doppelfunktion durch einen Stopfen 38 erreicht, der aus einem Filterstopfen 39 und einem Scheibenteil 42 besteht, wobei der Filterstopfen 39 einen kleineren Durchmesser als der Scheibenteil 42 aufweist. Damit ist der Stopfen 38 abgestuft ausgebildet, wobei der Filterstopfen zum Verschliessen des inneren Hohlraumes 56 dient und hierzu einen etwas grösseren Durchmesser als den Durchmesser des inneren Hohlraumes 56 aufweist, was durch eine Rippe 40 erreicht wird, die im eingesetzten Zustand mit der inneren Metallröhre 57 einen Presssitz bildet und neben der Abdichtung dazu dient, dass bei der Demontage der Luftfilter über diese Rippe 40 aus der Öffnung 37 herangezogen werden kann. Die Öffnung 37 des Filterraumes 32 ist mit einem sich nach aussen erweiterten Nacken 44 versehen, und der Scheibenteil 42 hat eine der Form des Nackens 44 angepasste Aussenseite, die gegen die Innenseite des Nackens im fest eingebauten Zustand zur Anlage kommt. Im eingebauten Zustand drückt eine Kontaktfläche 46 des Scheibenteils 42 gegen die Dichtungsmanschette 47 des Luftfilters, wobei infolge des Drucks auf die Dichtungsmanschette bzw. deren Kompression ein entsprechender Druck zum Abdichten des diesbezüglichen Endes des Luftfilters erreicht wird. Der im Betriebszustand von dem Scheibenteil 42 erzeugte Druck wird ausserdem über die Metallröhren auf die Dichtungsmanschette 47' übertragen, wodurch deren Stirnflächen 45' gegen den Wandteil 27 gedrückt wird und eine entsprechende Abdichtung gegenüber der Öffnung 60 erzielt ist, so dass keine Aussenluft entweichen kann.

Neben dem einstückig ausgebildeten Stopfen 38 kann der Verschlussdeckel 33 noch eine Platte 48 und einen Handverschluss 49 aufweisen. Der den Filterstopfen 39 und den Scheibenteil 42 umfassende Stopfen 38 ist aus elastischem Material, beispielsweise Gummi hergestellt und mit der Platte 48 verbunden, die zusammen mit dem Handverschluss 49 aus relativ unelastischem oder festem Material hergestellt ist und mit dem Handverschluss 49 derart verbunden ist, dass zwischen beiden eine relative Drehung stattfinden kann. Hierzu dient eine in der Platte 48 eingesetzte Niet 50, die in einen Mittelteil 51 des Handverschlusses 59 eingreift. Andere Verbindungsmöglichkeiten sind möglich, es ist lediglich darauf hinzuweisen, dass das Verschlussstück zum Anpressen des Stopfens gegen die eine Seite des Luftfilters entsprechend gedreht werden kann.

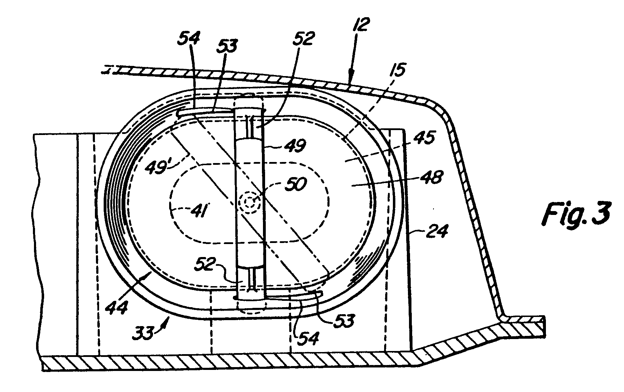

Im einzelnen wird der Handverschluss in den Nacken 44 in Form eines Bajonettverschlusses eingedreht, wozu der Handverschluss 49 entsprechende Endstücke 52 aufweist, die sich von dem Verschlussstück 49 aus nach aussen in Öffnungen 53 in den Nacken 44 erstrecken. Die Öffnungen 53 sind mit Rampenteilen 54 versehen, wodurch die Axialkräfte, die durch die Platte 48 übertragen werden, verstärkt werden. Die rampenförmig ausgebildeten Öffnungen 53 sind in Fig. 3 klar zu erkennen, die die ovale Querschnittsform des Luftfilters zeigt und ebenfalls den Verschlussteil 49 in seiner Schliessposition bzw. den Verschlussteil 49' in gestrichelten Linien in seiner offenen Position. Zum Verschliessen des diesbezüglichen Endes des Luftfilters wird der Stopfen 38 mit seinem Filterstopfen 39 in das Innere des inneren Hohlraumes 56 soweit eingeführt, dass die Metallröhren auf ihm festsitzen. Danach wird der Luftfilter durch den Nacken 44 mit seinem Sammelraum bodenwärts zeigend soweit eingeführt, bis dass die Stirnfläche 47' gegen den Wandteil 27 anliegt, wobei die Öffnung 60 zu dem inneren Hohlraum 56 ausgerichtet sein soll. Zu diesem Zeitpunkt befinden sich die Endstücke bereits über die Öffnungen 53 und durch Drehen des Handverschlusses im Uhrzeigerdrehsinn mit Bezug auf Fig. 3 werden die Endstücke in die Öffnungen eingreifen und dabei den Filterstopfen weiter in den inneren Hohlraum hineinschieben, bis dass die Kontaktfläche 46 des Scheibenteils 42 gegen die Dichtungsmanschetten 47 anliegt. Durch weiteres Drehen wird ein Druck auf die Dichtungsmanschetten ausgeübt, der sich auf die Dichtungsmanschetten 47' weiter fortpflanzt, wodurch der vorbeschriebene dichtende Presssitz zustande kommt.

Die Arbeitsweise des Ventilationssystems und die Wartung des Luftfilters kann in der folgenden Art und Weise erfolgen. Aussenluft bzw. Frischluft gelangt in das Ventilationssystem in der in Fig. 1 durch Pfeile dargestellten Art und Weise. Die Aussenluft tritt dann infolge der Blaskraft des Gebläses 14 in den Luftfilter 15 ein, wird dort gefiltert und in den Raum 16 mit der Luft aus dem Kabinenraum zusammengeführt und gegebenenfalls dann klimatisiert und in die Fahrerkabine durch das Gebläse 19 geblasen. Staub und andere Fremdkörper, die durch den Luftfilter 15 ausgefiltert wurden, sammeln sich im Innern des Luftfilters nach und nach an und verringern mit der Zeit die Durchströmfläche in dem Filter, so dass dieser gewartet werden muss. Zur Wartung braucht die Bedienungsperson lediglich das Dach 12 der Kabine 10 zu öffnen und den Handverschluss 49 des Verschlussstückes 33 entgegen dem Uhrzeigerdrehsinn zu verdrehen. Dabei wird der gesamte Luftfilter nach aussen in den Nacken 44 gezogen, solange sich noch die Endstücke 52 in den Öffnungen 53 befinden. Sobald die Endstücke 52 aus den Öffnungen 53 austreten, lässt sich der Luftfilter 15 mit dem Verschlussstücke 33 durch die Öffnung 37 herausziehen und entsprechend reinigen, beispielsweise durch einfaches Herausschütteln des Staubs, sofern die Filterelemente nicht gesondert gewartet werden müssen. Durch die horizontale Anordnung verbleiben der Staub und die übrigen Fremdkörper im Luftfilter, wenn dieser aus dem Ventilationssystem entfernt wird. Das Wiedereinsetzen erfolgt dann in der vorher beschriebenen Art und Weise, und wenn der Filterstopfen nicht entfernt zu werden braucht, ist beim Einsetzen auch keine besondere Sorgfalt darauf zu verwenden, dass der Sammelraum bodenwärts zeigt.

**Patentansprüche**

1. Ventilationssystem (11), insbesondere für Fahrzeugkabinen (10), mit einem Luftfilter (15), durch den die Luft mittels wenigstens eines Gebläses (14, 19) geführt wird und der einen inneren Hohlraum (56) aufweist, der zumindest teilweise von Filtermaterial (59) umgeben ist, dadurch gekennzeichnet, dass das oder die Gebläse (14, 19) derart angeordnet sind, dass Aussenluft zunächst in den Hohlraum (56) eintritt und danach durch das Filtermaterial (59) austritt.

2. Ventilationssystem nach Anspruch 1, dadurch gekennzeichnet, dass der Luftfilter (15) mit einem Sammelraum für Schmutzpartikel versehen ist.

3. Ventilationssystem nach Anspruch 1 oder 2, dadurch gekennzeichnet, dass der Luftfilter (15) an seinem einen Ende eine Einlassöffnung für die Aussenluft aufweist.

4. Ventilationssystem nach einem oder mehreren der vorherigen Ansprüche, dadurch gekennzeichnet, dass zu dem Durchtritt der Aussenluft eine Öffnung (60) in einer Anschlagfläche vorgesehen ist, gegen die eine Stirnfläche (45') an dem Ende des Luftfilters mit der Einlassöffnung dichtend gepresst wird.

5. Ventilationssystem nach einem oder mehreren der vorherigen Ansprüche, dadurch gekennzeichnet, dass der Luftfilter (15) beidenends offen und an seinem der Einlassöffnung abgelegenen Ende einen Verschlussdeckel (33) aufweist.

6. Ventilationssystem nach Anspruch 4 und 5, dadurch gekennzeichnet, dass der Verschlussdeckel (33) derart ausgebildet ist, dass er im geschlossenen Zustand und in Betriebsstellung des Luftfilters (15) die Stirnfläche (45') gegen die Anschlagfläche drückt.

7. Ventilationssystem nach Anspruch 6, dadurch gekennzeichnet, dass der Verschlussdeckel (33) abgestuft ausgebildet ist, einen Filterstopfen (39) zum Verschliessen des einen Endes des inneren Hohlraumes (56) und ein Scheibenteil (42) zum Verschliessen des der Stirnfläche (45') abgelegenen Endes des Luftfilters (15) aufweist, wobei gegen den Scheibenteil (42) ein Handverschluss (49) pressbar ist, der in ein eine Öffnung (37) zum Herausnehmen des Luftfilters (15) aufweisenden Wandteil (24') eindrehbar ist.

8. Ventilationssystem nach Anspruch 7, dadurch gekennzeichnet, dass Filterstopfen (39) und Scheibenteil (42) aus elastischem Material hergestellt sind und zwischen Scheibenteil (42) und Handverschluss (49) eine Platte (48) vorgesehen ist, wobei Filterstopfen, Scheibenteil, Platte und Handverschluss miteinander verbunden sind und der Handverschluss gegenüber Filterstopfen und Scheibenteil drehbar ist.

9. Ventilationssystem nach einem oder mehreren der vorherigen Ansprüche, dadurch gekennzeichnet, dass der Luftfilter (15) stromabwärts des Gebläses (14) vorgesehen ist.

10. Ventilationssystem nach einem oder mehreren der vorherigen Ansprüche mit einem horizontal liegenden Luftfilter (15), dadurch gekennzeichnet, dass der Luftfilter (15) im Querschnitt oval ausgebildet ist.

**Claims**

1. Ventilation system (11), especially for vehicle cabs (10), with an air filter (15), through which the air is fed by means of at least one blower (14, 19) and which has an inner hollow space (56) which is at least partially surrounded by filter material (59), characterized in that the blower or blowers (14, 19) are so arranged that external air enters first into the hollow space (56) and then emerges through the filter material (59).

2. Ventilation system according to claim 1, characterized in that the air filter (15) is provided with a collecting chamber for dirt particles.

3. Ventilation system according to claim 1 or 2, characterized in that the air filter (15) has at its one end an inlet opening for the external air.

4. Ventilation system according to one or more of the preceding claims, characterized in that an opening (60) is provided in an abutment surface for the passage of the external air, against which surface an end surface (45') at the end of the air filter with the inlet opening is tightly pressed.

5. Ventilation system according to one or more of the preceding claims, characterized in that the air filter (15) is open at both ends and has a closure cover (33) at the end lying away from the inlet opening.

6. Ventilation system according to claim 4 and 5, characterized in that the closure cover (33) is so formed that it presses the end surface (45') against the abutment surface in the closed state and in the working position of the air filter (15).

7. Ventilation system according to claim 6, characterized in that the closure cover (33) has a stepped form, comprises a filter plug (39) for closing the one end of the inner hollow space (56) and a disc part (42) for the closure of the end of the air filter (15) lying away from the end surface (45'), a manual closure (49) being capable of being pressed against the disc part (42) and being insertable into a wall part (24') having an opening (37) for removal of the air filter (15).

8. Ventilation system according to claim 7, characterized in that the filter plug (39) and disc part (42) are formed from elastic material and a plate (48) is provided between disc part (42) and manual closure (49), the filter plug, disc part, plate and manual closure being connected to one another and the manual closure being rotatable relative to the filter plug and disc part.

9. Ventilation system according to one or more of the preceding claims, characterized in that the air filter (15) is provided downstream of the blower (14).

10. Ventilation system according to one or more of the preceding claims with a horizontally lying air filter (15), characterized in that the air filter (15) is formed with an oval cross-section.

**Revendications**

1. Système de ventilation (11), en particulier pour cabines de véhicule (10), comportant un filtre à air (15) à travers lequel l'air est guidé au moyen d'au moins un ventilateur (14, 19) et qui comporte une cavité intérieure (56) qui est entourée au moins partiellement par une matière filtrante (59), caractérisé en ce que le ventilateur ou les ventilateurs (14, 19) sont disposés de façon que de l'air extérieur pénètre d'abord dans la cavité (56), et sorte ensuite à travers la matière filtrante (59).

2. Système de ventilation suivant la revendication 1, caractérisé en ce que le filtre à air (15) comporte une chambre collectrice pour des particules d'impuretés.

3. Système de ventilation suivant la revendication 1 ou 2, caractérisé en ce que le filtre à air (15) comporte à une première de ses extrémités une ouverture d'entrée pour l'air extérieur.

4. Système de ventilation suivant une ou plusieurs des revendications précédentes, caractérisé en ce que, pour le passage de l'air extérieur, une ouverture (60) est prévue dans une surface de butée contre laquelle une surface frontale (45') située à l'extrémité du filtre à air est appuyée en contact étanche avec l'ouverture d'entrée.

5. Système de ventilation suivant une ou plusieurs des revendications précédentes, caractérisé en ce que le filtre à air (15) est ouvert aux deux extrémités et comporte, à son extrémité opposée à l'ouverture d'entrée, un couvercle de fermeture (33).

6. Système de ventilation suivant les revendications 4 et 5, caractérisé en ce que le couvercle de fermeture (33) est conformé de façon à appuyer, dans l'état fermé et dans l'etat de fonctionnement du filtre à air (15), la surface frontale (45') contre la surface de butée.

7. Système de ventilation suivant la revendication 6, caractérisé en ce que le couvercle de fermeture (33) a une conformation étagée, comporte un bouchon de filtre (39) pour fermer une première extrémité de la cavité intérieure (56) et un élément discoïde (42) pour fermer l'extrémité du filtre à air (15) opposée à la surface frontale (45') un obturateur manuel (49) pouvant être appuée contre l'élément discoïde (42), et pouvant être enfoncé par rotation dans un élément de paroi (24') comportant une ouverture (37) pour le retrait du filtre à air (15).

8. Système de ventilation suivant la revendication 7, caractérisé en ce que le bouchon de filtre (39) et l'élément discoïde (42) sont constitués par une matière élastique et en ce qu'il est prévu, entre l'élément discoïde (42) et l'ouverture manuel (49), une plaque (48), le bouchon de filtre, l'élément discoïde, la plaque et l'obturateur manuel étant reliés entre eux et l'obturateur manuel pouvant tourner par rapport au bouchon de filtre et à l'élément discoïde.

9. Système de ventilation suivant une ou plusieurs des revendications précédentes, caractérisé en ce que le filtre à air (15) est prévu en aval du ventilateur (14).

10. Système de ventilation suivant une ou plusieurs des revendications précédentes, comportant un filtre à air (15) disposé horizontalement, caractérisé en ce que le filtre à air (15) a une section droite ovale.

**Fig. 1**

Fig. 2

Fig. 3